Europäisches Patentamt

European Patent Office

Office européen des brevets

(19)

(11) Veröffentlichungsnummer: **0 075 264**
**B1**

# (12) EUROPÄISCHE PATENTSCHRIFT

(45) Veröffentlichungstag der Patentschrift:
06.11.85

(21) Anmeldenummer: 82108503.2

(22) Anmeldetag: 15.09.82

(51) Int. Cl.⁴: **H 01 M 4/20**

(54) **Verfahren und Vorrichtung zum Füllen von Röhrchenelektroden für Bleiakkumulatoren.**

(30) Priorität: 17.09.81 DE 3136933

(43) Veröffentlichungstag der Anmeldung:
30.03.83 Patentblatt 83/13

(45) Bekanntmachung des Hinweises auf die Patenterteilung:
06.11.85 Patentblatt 85/45

(84) Benannte Vertragsstaaten:
AT BE CH FR GB LI LU NL SE

(56) Entgegenhaltungen:
DE - A - 2 621 708
DE - A - 2 830 888
DE - A - 2 950 230
GB - A - 1 481 953

(73) Patentinhaber: F.X. Mittermaier & Söhne
Accumulatorenfabrik und Elektrizitätswerk Isen, Am
Gries 29, D-8254 Isen (DE)

(72) Erfinder: Mittermaier, Xaver, Ing.-grad., Am Gries 29,
D-8254 Isen (DE)

(74) Vertreter: Hain, Leonhard, Dipl.-Ing., Tal 18/IV,
D-8000 München 2 (DE)

# Beschreibung

Die Erfindung betrifft ein Verfahren sowie eine Vorrichtung zum Füllen von Röhrchenelektroden für Bleiakkumulatoren, wobei eine pastenförmige aktive Masse durch Einpressen in die auf Füllrohre aufgesteckten und unter dem Fülldruck von diesen entsprechend dem Füllfortschritt abziehbaren Geweberöhrchen eingebracht wird.

Es ist bekannt, die zu sogenannten Taschen zusammengefassten Geweberöhrchen für Elektrodenplatten mittels einer pastösen aktiven Masse zu füllen. Dazu ist schon eine Vorrichtung bekannt, (US-A-3 228 796), bei der die zu füllenden Röhrchen auf Füllrohre aufgesteckt werden und sodann aus den Füllrohren die Masse in die Geweberöhrchen eingepresst wird, so dass diese unter dem Fülldruck von den Füllrohren abgeschoben werden. Die Füllrohre stehen bei dieser Vorrichtung auf der Austrittsseite von einem Extruder ab, der die pastöse Masse entweder mittels einer Schnecke oder eines Druckkolbens in die Füllrohre drückt. Dies ergibt lange Druckstrecken mit recht unterschiedlichen Druckverhältnissen. Dabei kommt es zu grossen Flüssigkeitsausscheidungen, die die Viskosität und damit die Güte der aktiven Masse beeinträchtigen. Selbst wenn die aktive Masse gut fliessfähig ist, wird sie durch den Extruder recht ungleichmässig auf die vielen nebeneinanderliegenden Füllrohre verteilt. Erreicht diese Masse aber mit zeitlichen Abweichungen die geschlossenen Röhrchenenden, dann beginnt der Röhrchenabzug bereits beim Auftreffen der ersten Füllungen auf den Bleisockel, auch wenn sich in anderen Geweberöhrchen noch Freiräume befinden. Durch ein Verfahren sowie eine Vorrichtung gemäss der DE-C-29 36 025 lässt sich dieser Nachteil beseitigen, wenn die auf die Füllrohre aufgesteckten Geweberöhrchen bis zum Erreichen eines vorbestimmten Fülldruckes festgehalten und erst hierauf entgegen einer einstellbaren Gegenkraft von den Füllrohren abgezogen werden. Da diese bekannte Vorrichtung mit einer quaderförmigen Druckkammer und einem mit Druckluft beaufschlagbaren Druckbalken arbeitet, ist nur eine absatzweise Druckbeaufschlagung möglich. Infolge dieser periodischen Druckausübung auf die in der Druckkammer aufgestaute Füllung sowie einer chargenweisen Auffüllung der Druckkammer ergeben sich häufig voneinander abweichende Konsistenzverhältnisse, die sich auf die Füllungen der Geweberöhrchen ungünstig auswirken.

Der Erfindung liegt daher die Aufgabe zugrunde, ein Verfahren und eine Vorrichtung zum Füllen von Röhrchenelektroden für Bleiakkumulatoren vorzuschlagen, um damit gleichmässigere Füllungen in den Röhrchen auch über längere Betriebszeiten zu erhalten.

Zur Lösung dieser Aufgabe ist das Verfahren gemäss der Erfindung dadurch gekennzeichnet, dass die aktive Masse über einen Pressraum in überschüssiger Menge den Füllrohren zugeführt und der Fülldruck durch Drosseln des Abflusses der überschüssigen Masse eingestellt wird.

Durch dieses Verfahren wird erreicht, dass die Masse in einem weitgehend fliessenden Zustand den Füllrohren zu und die überschüssige Masse an diesen vorbeigeführt wird, wobei ungünstige Massenaufstauungen und dadurch Veränderungen in der Konsistenz der aktiven Masse durch ungleichmässige Druckbelastungen verhindert werden. Ausserdem wird hierdurch eine Vergleichmässigung in den Röhrchenfüllungen erreicht.

Die überschüssige Masse wird zweckmässig wieder zur Ausgangsmasse zurückgeführt, mit dieser vermischt und erneut zugeführt.

Eine weitere Verbesserung wird noch erzielt, wenn der im Pressraum aufzubauende Druck und die zurückzuführende Menge der Masse reguliert werden können. Die Rückführung der Masse verhindert einerseits einen Verlust an Masse und gewährleistet andererseits, dass stets frische, in ihrer Zusammensetzung konstant bleibende Masse in den Pressraum und damit in die Füllrohre gelangt. Dies ermöglicht es auch, an den Pressraum mehrere Füllrohrsätze anzuschliessen.

Das erfindungsgemässe Verfahren wird in vorteilhafter Weise durch eine Vorrichtung verwirklicht, die an einem von einer Zuführeinrichtung beschickten, mit seitlich abstehenden Füllrohren ausgestatteten Pressraum eine mit einer Drosseleinrichtung versehene Abflussleitung für die überschüssige Masse vorsieht.

Zur Rückführung der überschüssigen Masse ist der Pressraum zweckmässig um eine bogenförmige zum Fülltrichter verlegte Rückführleitung verlängert. Ein zweckmässig unmittelbar hinter dem Pressraum angeordnetes Dosierventil dient zum Einstellen des im Pressraum gewünschten Gegendruckes sowie der zurückführenden Menge der Masse.

Besonders günstige Ergebnisse können erreicht werden, wenn die Masse mittels einer Exzenterschraubenpumpe zugeführt wird. Durch diese Pumpwirkung wird die Masse geschont, der ausgeübte Förderdruck gleichmässig verteilt und dadurch die Konsistenz der Masse aufrechterhalten.

Weitere Merkmale der Erfindung sind in zusätzlichen Unteransprüchen erwähnt.

Die Erfindung wird nachfolgend anhand eines Ausführungsbeispieles, des auch in der Zeichnung dargestellt ist, näher beschrieben. Es zeigen:

Fig. 1 eine Seitenansicht einer schematisierten Vorrichtung,

Fig. 2 eine Draufsicht hierzu, mit abgebrochener Rückführleitung und

Fig. 3 eine Stirnansicht auf einen Pressraum mit mehreren Füllrohrsätzen in vergrösserter Darstellung.

Die gezeigte Füllvorrichtung umfasst einen Fülltrichter 1, der sich unten auf einen Förderkanal 2 verengt, in dem eine Förderschnecke 3, von einem Motor 4 angetrieben, rotiert und die eingefüllte Masse zu einer Exzenterschraubenpumpe 5 transportiert. Diese weist einen in einem Stator 6 umlaufenden und eine Hin- und Herbewegung quer zu seiner Achse ausführenden Rotor (nicht gezeichnet) auf. Dieser Rotor ist in Verlängerung der Förderschnecke 3 angeordnet. An diese Exzenterschraubenpumpe schliesst sich ein Pressraum 8 an, von dem beispielsweise beiderseits Füllrohrsätze 10 senkrecht abstehen. Jeder dieser Sätze umfasst so viele Füllrohre 11, wie eine Gewebetasche Geweberöhrchen (nicht dargestellt) aufweist. In einem an den Pressraum anschliessenden Krümmer 12 ist ein Dosierventil 13 eingebaut, das als Membranventil ausgebildet ist und dessen Membran 14 in den Krümmerraum hinein verstellbar ist. Der Vorteil dieses Membranventiles ist es, dass es den Durchströmkanal nicht abrupt, sondern mittels eines allmählichen Übergangs verengt bzw. erweitert. An diesen Dosier-Krümmer schliesst sich sodann eine weitere Rückführleitung 15 an, die mit ihrer Austrittsöffnung 16 über dem Fülltrichter 1 endet. Die gesamte Vorrichtung kann beispielsweise auf einem Ständer 17 gelagert sein.

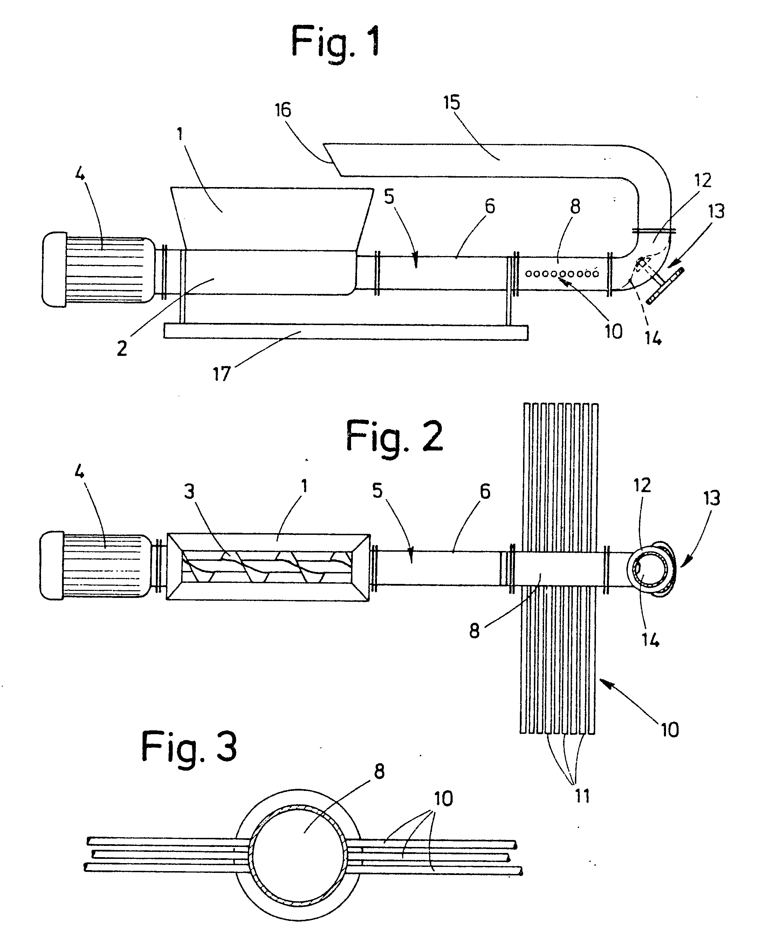

Wie Fig. 3 zeigt, können vom Pressraum auch beiderseits mehrere übereinander angeordnete Füllrohrsätze 10 abstehen.

Die Arbeitsweise dieser Vorrichtung ist folgende: Die in die Geweberöhrchen einzufüllende aktive Masse wird je nach Bedarf in den Fülltrichter 1 eingefüllt und durch die Transportschnecke 3 zur Exzenterschraubenpumpe 5 transportiert, die die Masse fortlaufend in den Pressraum 8 hineindrückt. Gemäss der Eigenart der Exzenterschraubenpumpe werden dabei unter weitgehender Schonung der Masse aneinandergereihte Strangabschnitte in den Pressraum geschoben. Auf diese Weise wird aus der Masse während dieses Transportes so gut wie keine Flüssigkeit ausgepresst und die Masse gelangt unter weitgehender Beibehaltung ihrer Ausgangskonsistenz in den Pressraum. Von diesem Pressraum wird die Masse unter dem aufgebauten Fülldruck in die Füllrohre 10 hineingedrückt. Ist an den Pressraum entgegen dem dargestellten Ausführungsbeispiel, eine Abflussleitung für die überschüssige Masse angeschlossen, dann sorgt der Leitungsquerschnitt bzw. eine Drossel für den gewünschten Fülldruck und die ausströmende überschüssige Menge. Ist jedoch, wie dargestellt, eine Rückführleitung vorgesehen, dann werden der Fülldruck und die Füllmenge im wesentlichen durch das Dosierventil 13 geregelt. Die Exzenterschraubenpumpe, deren Drehzahl zweckmässig veränderbar ist, kann in diesem Fall merklich mehr Masse fördern und dadurch zu einem gesteigerten Massenumlauf führen. Die Rückführbzw. Abflussleitung verhindert so die Bildung von Aufstauungen und Rückständen der aktiven Masse im Pressraum. Die überschüssige Masse kann direkt zum Fülltrichter zurückgeführt werden, wo sie wieder mit der Ausgangsmasse vermischt wird und auf diese Weise stets frische Masse von gewünschter Konsistenz in die Füllrohre gelangt.

Zum Einstellen der Vorrichtung wird die aktive Masse zunächst bei geöffnetem Dosierventil in Umlauf gebracht und dann mittels des Dosierventiles allmählich der notwendige Fülldruck im Pressraum eingestellt. Sollten sich die Druckverhältnisse im Pressraum ändern, dann kann durch das Dosierventil die erforderliche Nachregulierung jederzeit vorgenommen werden. Es hat sich bewährt, wenn mindestens 10 bis 20% der von der Pumpe geförderten Masse in Umlauf bleiben, wobei diese Menge auch über die Hälfte gesteigert werden kann. Die Drossel- oder Dosierorgane können auch mittels eines Kraftantriebes, wie Elektromotor, Druckluftmotor, Druckzylinder od. dgl. betätigt werden. Die Steuerung dieser Antriebseinrichtungen kann in Abhängigkeit messbarer Kriterien, wie Fülldruck, Austrittsmenge, Zyklenzahl usw., automatisch erfolgen. In vielen Fällen hat sich bewährt, das Dosierorgan nur in bestimmten Zeitabständen nach Ablauf mehrerer Füllzyklen zu betätigen.

Die Füllrohre müssen sich nicht ebenengleich beiderseits des Pressraumes erstrecken. Sie können auch satzweise auf den Pressraum-Umfang verteilt sein, sofern noch die Zuführung der Gewebetaschen gewährleistet ist. Anstelle des Membranventiles kann auch jede andere den Querschnitt der Rückführleitung verändernde Einrichtung vorgesehen sein. Auch ein verengtes Rohrstück kann diesem Zweck dienen. Wenn sich eine Rückführleitung nicht gut anbringen lässt, so kann am Austrittsende des Pressraumes auch ein Austrittsstutzen (nicht gezeichnet) mit im Querschnitt veränderbarer Austrittsöffnung vorgesehen sein. Die hier austretende Masse kann auf beliebige, geeignete Weise wieder der Ausgangsmasse zugeführt werden.

Auch wenn sich zur Zuführung der Masse in den Pressraum eine Exzenterschraubenpumpe, insbesondere in Verbindung mit den übrigen erfindungsgemässen Merkmalen, besonders eignet, so ist andererseits auch die Anwendung üblicher Einrichtung zu diesem Zweck möglich.

Sind der sich an den Pressraum anschliessende Austrittsstutzen bzw. Durchströmkanal mit Rückführleitung im Querschnitt so gross ausgeführt, dass sie die gesamte Fördermenge der Pumpe aufnehmen können und ist die vorhandene Drosseleinrichtung ebenfalls auf diesen Durchströmquerschnitt zu öffnen, dann kann die gesamte Fördermasse durch den Pressraum hindurch geleitet werden, ohne dass sie in die Füllrohre gedrängt wird. Dieser Betriebszustand ist dann von Vorteil, wenn bei fortlaufender Förderung durch die Pumpe od. dgl. Fördervorrichtung der Füllvorgang, z.B. zum Wechseln der Füllrohre, unterbrochen werden soll. Bleibt nämlich die Förderung der Masse erhalten, dann gelangt auch stets Masse gleicher Konsistenz in den Pressraum. Die in diesem Fall notwendige Verstellung der Drosseleinrichtung zur Gewinnung des gewünschten Fülldruckes beeinflusst hingegen die Konsistenz der Masse kaum, so dass die Aufrechterhaltung einer fortlaufenden Förderung anzustreben ist.


**Patentansprüche**

1. Verfahren zum Füllen von Röhrchenelektroden für Bleiakkumulatoren, wobei eine pastenförmige aktive Masse durch Einpressen in die auf Füllrohre aufgesteckten und unter dem Fülldruck von diesen entsprechend dem Füllfortschritt abziehbaren Geweberöhrchen eingebracht wird, dadurch gekennzeichnet, dass die aktive Masse über einen Pressraum in überschüssiger Menge den Füllrohren zugeführt und der Fülldruck durch Drosseln des Abflusses der überschüssigen Masse eingestellt wird.

2. Verfahren nach Anspruch 1, dadurch gekennzeichnet, dass die überschüssige Masse zur Ausgangsmasse zurückgeführt, mit dieser vermischt und erneut zugeführt wird.

3. Verfahren nach Anspruch 1 oder 2, dadurch gekennzeichnet, dass die aktive Masse zu den Füllrohren fortlaufend gepumpt wird.

4. Vorrichtung zur Durchführung des Verfahrens nach Anspruch 1, dadurch gekennzeichnet, dass an einem von einer Zuführeinrichtung beschickten, mit seitlich abstehenden Füllrohren (10) ausgestatteten Pressraum (8) sich eine mit einer Drosseleinrichtung versehene Abflussleitung für die überschüssige Masse anschliesst.

5. Vorrichtung nach Anspruch 4, dadurch gekennzeichnet, dass an den Pressraum (8) sich eine Rückführleitung (15), deren Austrittsöffnung (16) über dem Fülltrichter (1) endet, anschliesst.

6. Vorrichtung nach Anspruch 4 oder 5, dadurch gekennzeichnet, dass als Drosseleinrichtung unmittelbar nach dem Pressraum (8) eine Einrichtung zur Veränderung des Durchströmquerschnittes vorgesehen ist.

7. Vorrichtung nach Anspruch 6, dadurch gekennzeichnet, dass die Einrichtung zur Querschnittsveränderung ein Dosierventil (13) ist.

8. Vorrichtung nach Anspruch 7, dadurch gekennzeichnet, dass das Dosierventil (13) in einen sich unmittelbar an den Pressraum (8) anschliessenden Krümmer (12) eingebaut ist.

9. Vorrichtung nach Anspruch 7 oder 8, dadurch gekennzeichnet, dass das Dosierventil (13) ein Membranventil ist.

10. Vorrichtung nach einem der Ansprüche 4 bis 9, dadurch gekennzeichnet, dass zum Zuführen der Masse eine Exzenterschraubenpumpe (5) vorgesehen ist.

11. Vorrichtung nach einem der Ansprüche 5 bis 10, dadurch gekennzeichnet, dass vom Pressraum (8) beiderseits mehrere Füllrohrsätze (10) abstehen.

12. Vorrichtung nach einem der Ansprüche 5 bis 11, dadurch gekennzeichnet, dass die sich an den Pressraum (8) anschliessenden Druck- bzw. Abflusseinrichtungen und Drosseleinrichtungen etwa auf einen Durchflussquerschnitt für die gesamte von der Fördervorrichtung zugeführte Masse einstellbar sind.

## Revendications

1. Procédé de remplissage d'électrodes tubulaires d'accumulateurs au plomb, dans lequel une matière active pâteuse est introduite par injection dans des petits tubes en tissu engagés sur des tubes de remplissage et pouvant être retirés de ceux-ci sous la pression de remplissage d'après l'avancement du remplissage, caractérisé par le fait que la matière active est envoyée en quantité excédentaire aux tubes de remplissage par une chambre de pression et la pression de remplissage est réglée par étranglement de l'écoulement de la matière excédentaire.

2. Procédé selon la revendication 1, caractérisé par le fait que la matière excédentaire est ramenée à la matière de départ, mélangée à elle et recyclée.

3. Procédé selon l'une des revendications 1 et 2, caractérisé par le fait que la matière active est envoyée de façon continue par pompage aux tubes de remplissage.

4. Dispositif pour la mise en oeuvre du procédé de la revendication 1, caractérisé par le fait qu'une chambre de pression (8) pourvue de tubes de remplissage (10) partant latéralement et alimenté par un dispositif d'alimentation est reliée à une conduite d'écoulement de la matière excédentaire pourvue d'un dispositif d'étranglement.

5. Dispositif selon la revendication 4, caractérisé par le fait que la chambre de pression (8) est reliée à une conduite de retour (15) dont l'orifice de sortie (16) est au-dessus de la trémie d'alimentation (1).

6. Dispositif selon l'une des revendications 4 et 5, caractérisé par le fait que comme dispositif d'étranglement, il est prévu juste après la chambre de pression (8) un dispositif de modification de la section de passage.

7. Dispositif selon la revendication 6, caractérisé par le fait que le dispositif de modification de la section de passage est un robinet de dosage (13).

8. Dispositif selon la revendication 7, caractérisé par la fait que le robinet de dosage (13) est monté dans un coude (12) placé juste après la chambre de pression (8).

9. Dispositif selon l'une des revendications 7 et 8, caractérisé par le fait que le robinet de dosage (13) est un robinet à membrane.

10. Dispositif selon l'une des revendications 4 à 9, caractérisé par le fait que pour le déplacement de la matière est prévue une pompe à vis excentrique (5).

11. Dispositif selon l'une des revendications 5 à 10, caractérisé par le fait que plusieurs groupes de tubes de remplissage (10) partent de chaque côté de la chambre de pression (8).

12. Dispositif selon l'une des revendications 5 à 11, caractérise par le fait que les dispositifs de refoulement ou d'évacuation et les dispositifs d'étranglement qui font suite à la chambre de pression (8) sont réglable à peu près à une section correspondant au passage de toute la matière envoyée par le dispositif de transport.

## Claims

1. Method for filling tubular electrodes of lead accumulators, in which a paste-like active material is pressed into little woven tubes which are slipped on filling tubes and can be pulled off them under the filling pressure depending on the filling advance, characterized in that the active material, after passing a pression chamber, is fed to the filling tubes in an excess amount and the filling pressure is regulated by throttling the discharge of the excess material.

2. Method according to claim 1, characterized in that the excess material is recycled to the starting material, mixed with it and fed again.

3. Method according to claim 1 or 2, characterized in that the active material is continuously pumped to the filling tubes.

4. Apparatus for carrying out the method according to claim 1, characterized in that a pressure chamber (8) provided with laterally protruding filling tubes (10) and charged by a feeding device is connected to a discharge pipe for the excess material provided with a throttling device.

5. Apparatus according to claim 4, characterized in that the pressure chamber (8) is connected to a recycling pipe (15) whose discharge orifice (16) ends above the filling funnel (1).

6. Apparatus according to claim 4 or 5, characterized in that, as a throttling device, a device for changing the flow section is provided immediately behind the pressure chamber (8).

7. Apparatus according to claim 6, characterized in that the device for changing the flow section is a metering valve (13).

8. Apparatus according to claim 7, characterized in that the metering valve (13) is built into a bend (12) which is immediately connected to the pressure chamber (8).

9. Apparatus according to claim 7 or, characterized in that the metering valve (13) is a diaphragm valve.

10. Apparatus according to one of the claims 4 to 9, characterized in that for feeding the material an eccentric helical pump (5) is provided.

11. Apparatus according to one of the claims 5 to 10, characterized in that several sets of filling tubes (10) protrude laterally from the pressure chamber (8).

12. Apparatus according to one of the claims 5 to 11, characterized in that the pressure or discharge devices and throttling devices connected to the pressure chamber (8) are approximately adjustable to a flow section for all the material being fed by the transporting device.

# Fig. 1

# Fig. 2

# Fig. 3